# EUROPÄISCHE PATENTSCHRIFT

(11) **EP 1 492 697 B1**
(45) Veröffentlichungstag und Bekanntmachung des Hinweises auf die Patenterteilung: **27.09.2006**
(21) Anmeldenummer: 03714911.9
(22) Anmeldetag: 01.04.2003
(51) Int. Cl.: B62M 3/08

(54) **PEDALSYSTEM**
PEDAL SYSTEM
SYSTEME DE PEDALE

(30) Priorität: 05.04.2002 AT 5332002
(43) Veröffentlichungstag der Anmeldung: 05.01.2005
(73) Patentinhaber: Malle OEG - Technisches Büro Für Maschinen- und Anlagebau, 9181 Feistritz i. Ros (AT)
(72) Erfinder: MALLE, Manfred, A-9181 Feistritz i. Ros. (AT)
(74) Vertreter: Vinazzer, Edith
(86) Internationale Anmeldenummer: PCT/EP2003/003367
(87) Internationale Veröffentlichungsnummer: WO 2003/084808

(56) Entgegenhaltungen:
- FR-A- 2 624 470

## Beschreibung

Die Erfindung betrifft ein Pedalsystem für Fahrräder mit einem an einem Schuh befestigbaren und ein Rastelement aufweisenden Schuheinsatz und einem am Fahrrad befestigbaren, um eine Achse drehbaren Pedal, welches eine Aufnahme für das Rastelement aufweist, in welcher dieses gegen Federkraft einrastbar und aus welcher dieses unter Ausführen einer Drehbewegung lösbar ist, wobei die Aufnahme zwischen zwei zur Pedalachse rotationssymmetrisch ausgeführten Aufnahmeteilen gebildet ist, welche gegen Federkraft in Richtung Pedalachse voneinander weg bewegbar und Bestandteile von zylindrische Außenflächen aufweisenden Hülsen sind.

Für Rennräder und Mountainbikes haben sich Pedalsysteme durchgesetzt, die aus an den Schuhen befestigten Schuheinsätzen und am Fahrrad befestigten Pedalen bestehen. Üblich sind Pedale, welche jeweils an zwei gegenüberliegenden Seiten übereinstimmend ausgeführte Rasteinrichtungen zum lösbaren Einrasten des Rastelementes des Schuheinsatzes aufweisen. Ein Pedalsystem der eingangs genannten Art ist beispielsweise aus der FR-A-2 624 470 bekannt. Im verrasteten Zustand sitzt eine am Schuheinsatz ausgeformte Nut formschlüssig auf einem zylindrischen Hülsenabschnitt, entsprechend gekrümmt ausgeführte Ansätze am Schuheinsatz untergreifen die beiden Aufnahmeteile. Ein Lösen des Schuheinsatzes und damit des Schuhs vom Pedal erfordert ein Verschieben des Schuhs gegen Federkraft in Richtung Pedalachse, sodass der Schuheinsatz durch ein anschließendes Hochkippen vom Pedal freikommt. Im Falle eines Sturzes wird daher ein Loskommen des Schuhs vom Pedal kaum möglich sein, da vom Radfahrer das Durchführen einer willentlichen Bewegung des Schuhs in Pedalachse erforderlich ist.

Weitere Pedalsysteme sind beispielsweise aus der EP-A-1 167 173 und der EP-A-0 826 589 bekannt. Da diese Pedalsysteme zwei Rasteinrichtungen aufweisen und somit zwei Rastpositionen für den Schuheinsatz zur Verfügung stellen, sind sie sehr komplex aufgebaut und bestehen aus vielen, oft auch kleinen Bauteilen. Dies macht diese Pedalsysteme reparaturanfällig und setzt dem Wunsch, ihnen ein möglichst geringes Gewicht zu verleihen, Grenzen. Auch bezüglich ihrer Funktion sind diese Pedalsysteme nicht optimal. Vom Benützer muss vorab die Lage des Pedals relativ zum Schuheinsatz eingestellt werden, um ein Verrasten durchführen zu können. Das Lösen des Schuhes vom Pedal muss unter allen möglichen Umständen, insbesondere im Falle eines Sturzes des Radfahrers, schnell und einfach möglich sein, auch dann, wenn der Radfahrer das Pedal kraftmäßig nicht entlasten kann. Auch diesbezüglich sind viele der bekannten Pedalsysteme verbesserungswürdig.

Der Erfindung liegt somit die Aufgabe zu Grunde, ein Pedalsystem der eingangs genannten Art insbesondere derart auszuführen, dass zum Einrasten des Rastelementes des Schuheinsatzes keine vorherige Positionierung des Pedals erforderlich ist, dass es einfach und aus weniger Bauteilen als die bekannten Systeme ausgeführt ist, und dass ein Lösen des Schuheinsatzes vom Pedal unter allen möglichen Bedingungen - auch im Falle eines Sturzes des Radfahrers - schnell und problemlos möglich ist.

Gelöst wird die gestellte Aufgabe erfindungsgemäß dadurch, dass das Rastelement ein längliches, in seiner eingerasteten Lage quer zur Pedalachse verlaufendes Teil ist, welches zwei Nocken aufweist, welche in der eingerasteten Lage die Aufnahmeteile untergreifen, und dass der Schuheinsatz ein Steuerelement aufweist, welches sich bei einer Drehbewegung des Schuheinsatzes zum Lösen des eingerasteten Rastelementes an den zylindrischen Außenflächen der Hülsen derart abstützt, dass das Rastelement angehoben wird.

Ein erfindungemäß ausgeführtes Pedalsystem weist daher ein Pedal mit einer Aufnahme für das Rastelement auf, welche über den gesamten Umfang gleichermaßen ein Einrasten des Rastelementes gestattet. Damit entfällt die Notwendigkeit, zum Einsetzen des Schuhs auf eine bestimmte Pedalposition achten zu müssen. Gegenüber den von bekannten Pedalsystemen her üblichen doppelten Rasteinrichtungen kann ein erfindungsgemäßes Pedalsystem somit auch wesentlich weniger Bauteile aufweisen. Das wirkt sich vorteilhaft auf das Gewicht und die Haltbarkeit des Pedals aus. Von besonderem Vorteil ist, dass eine Drehbewegung senkrecht zu Pedalachse sicherstellt, dass der Schuheinsatz unter allen möglichen Bedingungen vom Pedal freikommt.

Eine bevorzugte Ausführungsform der Erfindung besteht darin, dass die Aufnahmeteile einander zugewandte Aufnahmenuten bilden bzw. aufweisen. Dadurch kann eine besonders funktionssichere Ausführung sichergestellt sein.

Dabei ist es lediglich erforderlich, dass eines der beiden Aufnahmeteile gegen Federkraft bewegbar ist, wodurch ein einfacher Aufbau unterstützt und die Anzahl der Bauteile verringert wird.

Ein einfacher, zweckmäßiger und sehr robuster Aufbau des Pedals sieht vor, dass die eine Hülse gegenüber der Achse des Pedals drehbar gelagert ist und die zweite Hülse auf der ersten Hülse beweglich gelagert ist.

Besonders kompakt lässt sich das Pedal dadurch gestalten, dass die erste Hülse gegenüber der Achse des Pedals unverschiebbar angeordnet wird und die zweite Hülse jene ist, die gegen Federkraft verschiebbar angeordnet wird.

Auch die Ausführung und Unterbringung der zumindest einen Feder hat Einfluss auf die Dauerhaltbarkeit und Funktionssicherheit des Pedalsystems. In diesem Zusammenhang ist es besonders günstig, wenn zumindest eine Feder eine Druckfeder ist, welche mit ihrem eine Ende an einem mit der ersten Hülse verbundenen Widerlager und mit ihrem zweiten Ende an der zweiten Hülse abgestützt ist.

Die erste Hülse wird zweckmäßiger Weise mittels Kugellager direkt am Achsteil des Pedals drehbar gelagert.

Das am Schuhansatz vorgesehene Rastelement weist gemäß einer bevorzugten Ausführungsform der Erfindung einen zum Positionieren zwischen den Aufnahmeteilen vorgesehenen keilförmig ausgeführten Bereich auf.

Die für die Verrastung des Rastelementes vorgesehenen Nocken sind an den Seitenflächen des Rastelementes vorgesehen.

Das Steuerelement wird vorteilhafter Weise derart ausgeführt, dass es seitlich verlaufende Stützflügel aufweist, deren Innenseite mit zylindrisch und zur Pedalachse rotationssymmetrisch verlaufenden Außenflächenbereichen der Hülsen in Kontakt treten bzw. bei eingerastetem Rastelement sind und welche mit einem Radius gekrümmt sind, der größer ist als der Radius der Außenflächen der Hülsen. Der Unterschied der Radien stellt die bereits erwähnte zentrierende Funktion sicher und hat darüber hinaus den Vorteil, dass bei einer Drehbewegung zum Lösen des eingerasteten Rastelementes sich die Stützflügel derart an den Außenflächen der Hülsen abstützen, dass sie das Rastelement anheben und automatisch aus der verrasteten Position befreien.

Dem Wunsch nach wenige Bauteilen und wenig Gewicht kommt es entgegen, wenn das Steuerelementes jenes Teils des Schuheinsatzes ist, welches direkt mit dem Schuh verbunden wird.

Weitere Merkmale, Vorteile und Einzelheiten der Erfindung werden nun anhand der Zeichnung, die ein Ausführungsbeispiel darstellt, näher beschreiben. Dabei zeigen
Fig. 1 das Pedal in Schrägansicht,
Fig. 2 einen Längsschnitt durch das Pedal gemäß Fig. 1,
Fig. 3 und 4 Bestandteile des Schuheinsatzes in Schrägansicht
Fig. 5 den Schuheinsatz in Schrägansicht,
Fig. 6 eine Seitenansicht des Schuheinsatzes,
Fig. 7 das Pedal mit eingerastetem Schuheinsatz in Schrägansicht,
Fig. 8 einen Längsschnitt durch das Pedal mit eingerastetem Schuheinsatz,
Fig. 9 eine Draufsicht auf das Pedal mit eingesetztem Schuheinsatz und
Fig. 10 eine Stellung des Schuheinsatzes gegenüber dem Pedal während des Lösens der Verrastung des Schuheinsatzes.

Die Bestandteile des Pedalsystems, die zur Anordnung bzw. Befestigung am Fahrrad vorgesehen sind, werden nachfolgend als Pedal 1, jene Bestandteile, die für eine Befestigung an einer Schuhsohle vorgesehen sind, als Schuheinsatz 12 bezeichnet.

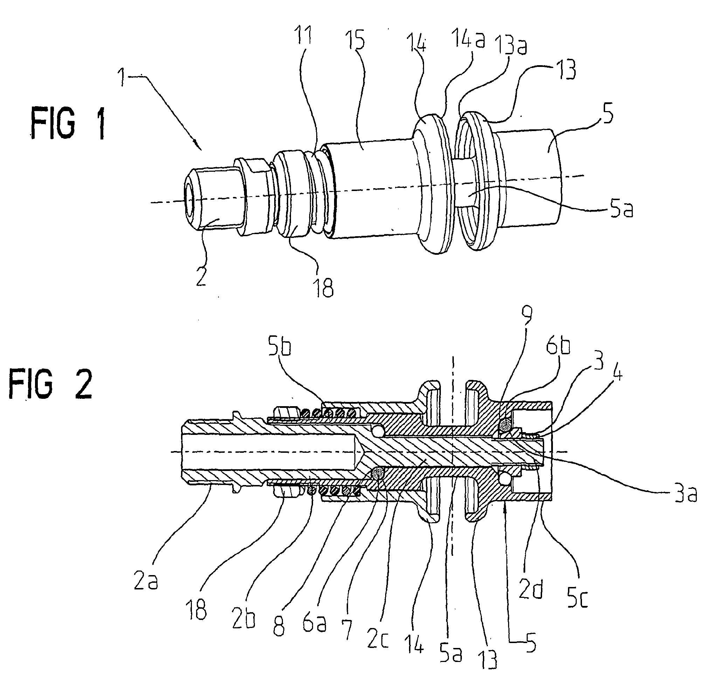

Der Aufbau und die einzelnen Bestandteile des Pedals 1 werden nun insbesondere unter Bezugnahme auf die Fig. 1 und 2 näher erläutert. Das Pedals 1 weist ein Achsteil 2 auf, welches an der Kurbel des nicht gezeigten Fahrrades fest verschraubt wird. Das Achsteil 2 besteht aus mehreren zylindrischen und zueinander konzentrisch angeordneten Abschnitten unterschiedlichen Durchmessers. An seinem einen Ende ist das Achsteil 2 in bekannter Weise mit einem mit einem Gewinde versehenen innerer Endabschnitt 2a zum Anschrauben des Pedals 1 an der Kurbel des Fahrrades versehen. An den Endabschnitt 2a schließt ein erster Lagerabschnitt 2b an, an welchen ein zweiter Lagerabschnitt 2c geringeren Durchmessers anschließt. Den letzten Abschnitt bildet ein äußerer Endabschnitt 2d, der einen geringeren Durchmesser aufweist als der zweite Lagerabschnitt 2c. Der äußere Abschnitt 2d ist mit einem Gewinde zum Aufschrauben einer Lagermutter 3 und einer Kontermutter 4 versehen.

Auf den Lagerabschnitten 2b und 2c ist eine Hülse 5 drehbar gelagert, die gegenüber dem Achsteil 2 in Axialrichtung nicht beweglich ist. Die Hülse 5 weist einen zentralen Abschnitt 5a, mit welchem sie auf dem zweiten Lagerabschnitt 2c gelagert ist, sowie je einen inneren und einen äußeren Endabschnitt 5b, 5c auf. Eine umlaufende Schulter 7 im Übergangsbereich des zentralen Abschnittes 5a zum inneren Endabschnitt 5b bildet gemeinsam mit einer umlaufenden Schulter 8 im Übergangsbereich des ersten Lagerabschnittes 2b zum zweiten Lagerabschnitt 2c eine Aufnahmestelle für ein erstes Kugellager 6a. Eine weitere umlaufende Schulter 9 im Übergangsbereich zwischen dem zentralen Abschnitt 5a und dem äußeren Endabschnitt 5c der Hülse 5 bildet gemeinsam mit einer an der Lagermutter 3 umlaufenden Sitzfläche 3a eine Aufnahme für ein zweites Kugellager 6b. Der äußere Endabschnitt 5c der Hülse 5 ist in der Art eines Hohlzylinders ausgeführt und mit derart großen Durchmessern versehen, dass das zweite Kugellager 6b, die Lagermutter 3 und die Kontermutter 4 positioniert werden können.

Der zentrale Abschnitt 5a der Hülse 5 ist außenseitig mit einem konzentrisch umlaufenden und eine gleichermaßen umlaufende Aufnahmenut aufweisenden Aufnahmeteil 13 versehen, das in Richtung inneren Endabschnitt 5b offen ist. Das Aufnahmeteil 13 bildet gemeinsam mit einem übereinstimmend ausgeführten zweiten Aufnahmeteil 14 einer weiteren Hülse 15 die Einraststelle für den weiter unten noch näher beschriebenen Schuheinsatz 12. Die Stirnseiten der Randbereiche 13a, 14a der Aufnahmeteile 13, 14 sind einander in fluchtender Ausrichtung zugewandt. Die Hülse 15 ist auf eine zylindrische Sitzfläche 10 an der Außenseite des zentralen Abschnittes 5a der Hülse 5 aufgeschoben. Die zylindrische Sitzfläche 10 weist gegenüber dem inneren Endabschnitt 5b der Hülse 5 einen etwas größeren Durchmesser auf und ist gegenüber diesem über eine umlaufende Stufe 17 abgesetzt. Die Stufe 17 bildet einen Anschlag für einen an der Innenseite der Hülse 15 umlaufenden Ansatz 16. Am Ansatz 16 ist das eine Ende einer Druckfeder 11 abgestützt, deren zweites Ende eine Einstellmutter 18 beaufschlagt, die auf den inneren Endabschnitt 5b der Hülse 5 aufgeschraubt ist. Die Vorspannung der Druckfeder 11 kann somit durch ein Verstellen der Position der Einstellmutter 18 verändert werden. Der an den Stützansatz 16 der Hülse 15 anschließende Endabschnitt bildet gemeinsam mit einem Bereich der äußeren Umfangsfläche des inneren Endabschnittes 5b der Hülse 5 eine Aufnahme für die Druckfeder 11.

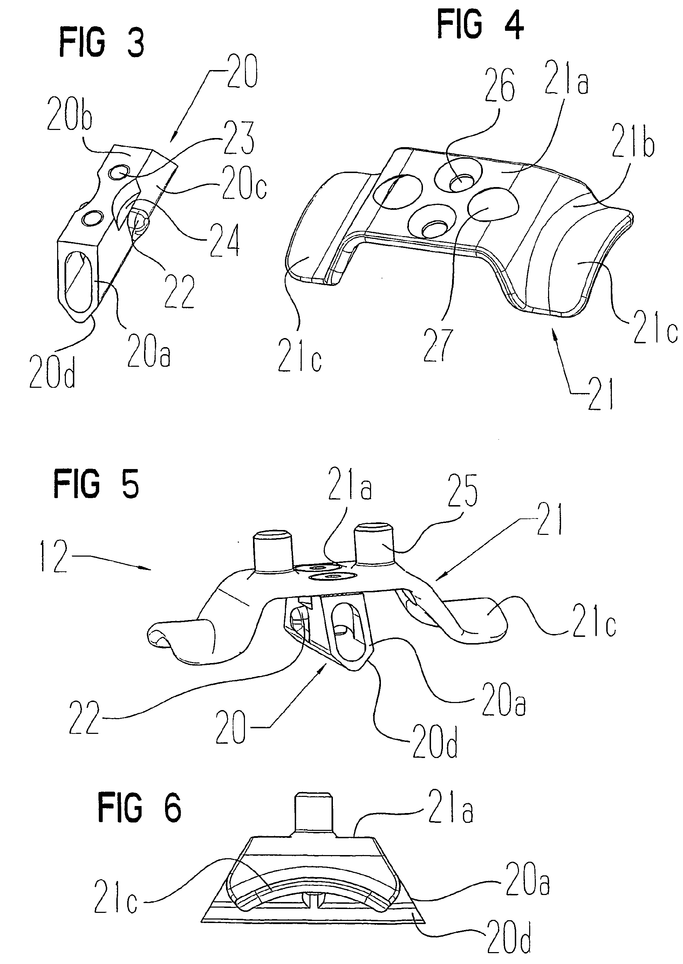

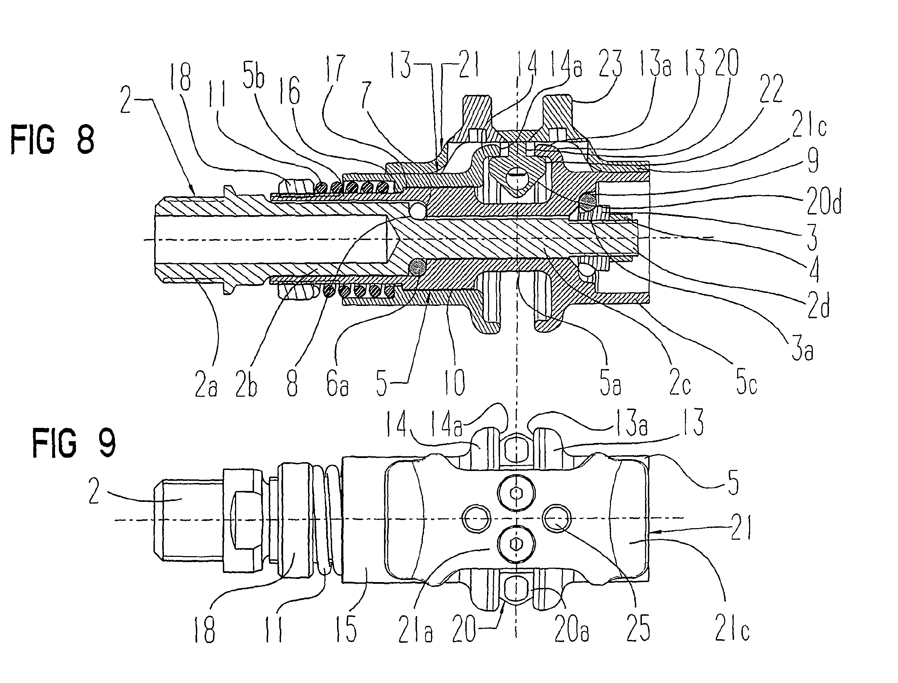

Fig. 3 bis 6 zeigen besonders gut die Ausgestaltung und Anordnung der Bestandteile des Schuheinsatzes 12. Hauptbestandteile des Schuheinsatzes 12 sind ein Rastelement 20 (Fig. 3) und ein Steuerelement 21 (Fig. 4). Das Rastelement 20 ist ein längliches Bauteil, welches bei der gezeigten Ausführungsform zur Verringerung seines Gewichtes über seine Längserstreckung mit einem Hohlraum versehen ist. Das Rastelement 20 weist parallel zueinander verlaufende, gleich große und in der Form von gleichschenkeligen Trapezen ausgeführte Seitenflächen 20c, eine rechteckige Oberseite 20b und Stirnseiten 20a mit keilförmig zusammenlaufenden Seitenkanten auf, sodass die der Oberseite 20b gegenüberliegende Unterseite von zwei Keilflächen 20d gebildet wird. An jeder Seitenfläche 20c ist mittig eine Nocke 22 vorgesehen. An der Oberseite 20b des Rastelementes 20 sind zwei Schraublöcher 23 zum Verbinden des Rastelementes 20 mit dem Steuerelement 21 sowie zwei Aussparungen 24 zu erkennen, welche Platz für Schraubenköpfe von Schrauben 23 (siehe Fig. 8) zur Befestigung des Steuerelementes 21 am nicht dargestellten Schuh zur Verfügung stellen.

Das Steuerelement 21 besteht aus einem zentralen Basisteil 21a, welches die Schraublöcher 26 zum Verbinden mit dem Rastelement 20 und die Schraublöcher 27 zum Verbinden des Elementes 21 mit dem Schuh aufweist. An das Basisteil 21a schließen über leicht geneigte Verbindungsflächen 21b Stützflügel 21c an, deren Unterseite entlang von Kreisbögen gekrümmt ist, deren Radien etwas größer sind als der Radius der Außenfläche des äußeren Endabschnittes 5c der Hülse 5 bzw. der Radius der Außenfläche der Hülse 12, deren Radien bei der gezeigten Ausführung übereinstimmen. Bei der dargestellten Ausführungsform sind ferner das Steuerelement 21 und das Rastelement 20 bezüglich ihrer Längs- und Querachsen symmetrisch ausgeführte Bauteile. Das an der Unterseite des Basisteils 21 angeschraubte Rastelement 20 überragt die seitlichen Stützflügel 21c des Steuerelementes 21.

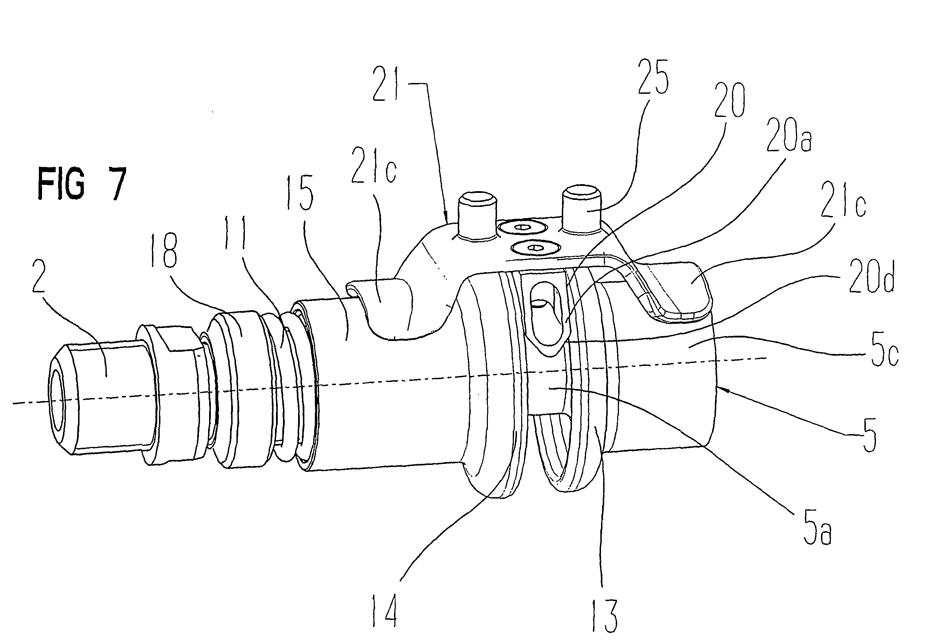

Fig. 7 bis 10 zeigen den Schuheinsatz 12 in seiner am Pedal 1 eingesetzten Lage, die Nocken 22 untergreifen die Randbereiche 13a, 14a der Aufnahmeteile 13, 14 und die Stützflügel 21c berühren mittig die Außenseiten der Hülsen 5 bzw. 15.

Das erfindungsgemäße Pedalsystem ist nicht nur einfach aufgebaut sondern auch besonders funktionell. Zum Einrasten des Schuheinsatzes 12 am Pedal 1 braucht das Pedal 1 keine besondere Position einzunehmen, ein Einrasten des Rastelementes 20 in die zwischen den Aufnahmeteilen 13, 14 gebildete Aufnahme ist über den gesamten Umfang des Pedal 1 gleichermaßen möglich. Der Radfahrer braucht lediglich das Rastelement 20 zwischen den beiden Teilen 13, 14 zu positionieren und unter Aufbringen einer gewissen Kraft zu verrasten. Die Keilflächen 20d des Rastelementes 20 erleichtern das Positionieren derselben. Über die Nocken 22 wird während des Einrastvorganges die Hülse 15 gegen die Kraft der Feder 11 verschoben. Befinden sich die beiden Nocken 22 innerhalb der Randbereiche 13a, 14a ist die Hülse 15 wieder in ihre Ausgangslage zurückgekehrt. Der Schuheinsatz 12 ist daher mit dem Pedal 1 kraftschlüssig verbunden, sodass das Pedalsystem sowohl auf Zug als auch auf Druck belastbar ist. Während des Einsetzens des Rastelementes 20 übernehmen die beiden Stützflügel 21c in Folge ihrer besonderen Ausbildung eine Steuerfunktion, indem sie auf ein gegebenenfalls anfangs außermittig (bezogen auf die Längsachse des Pedals 1) positioniertes Rastelement 20 zentrierend wirken.

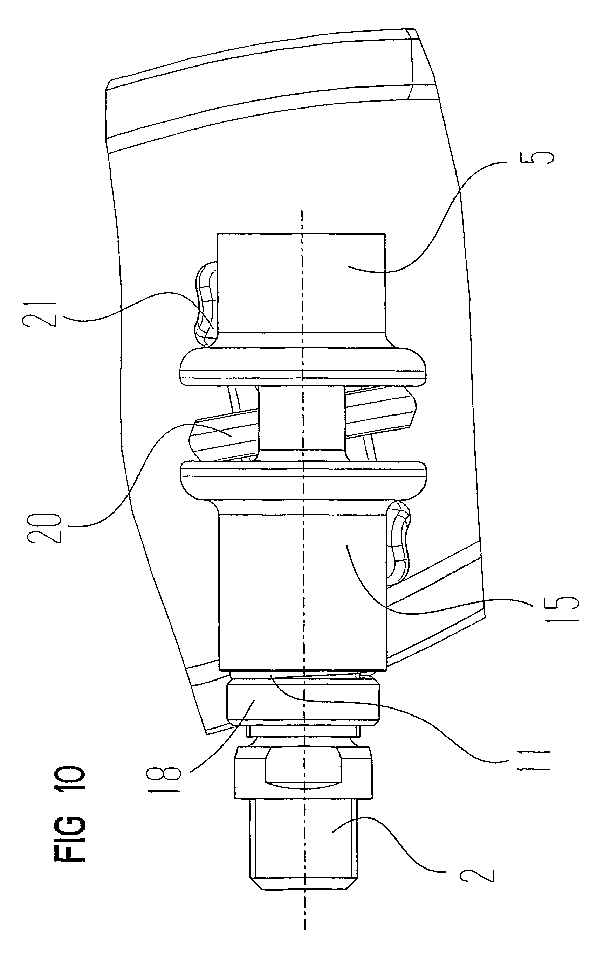

Das Lösen des Schuheinsatzes 12 vom Pedal 1 ist unter allen möglichen Bedingungen - auch im Falle eines Sturzes des Radfahrers - schnell und problemlos möglich. Selbst wenn vom Schuh auf das Pedal 1 eine Kraft ausgeübt wird, ist ein schnelles Lösen des Schuhs vom Pedal 1 durch ein Drehen des Schuhs in eine der beiden Richtungen gewährleistet. Ein Drehen des Schuhs und damit des Schuheinsatzes 12 hat zur Folgen, dass, wie Fig. 10 zeigt, das Rastelement 20 die Hülse 15 gegen die Kraft der Feder 11 verschiebt und die Öffnung zwischen den Aufnahmeteilen 13, 14 so weit vergrößert, dass das Rastelement 20 freikommen kann. Gleichzeitig bewirken die auf den Außenflächen der Hülsen 5 und 15 gleitenden Stützflügel 21c in Folge der erwähnten unterschiedlichen Radien ein Anheben des Schuheinsatzes 2 gegenüber dem Pedal 1. Die an diesen Bewegungsabläufen beteiligten Bauteile werden daher insbesondere derart ausgeführt und aufeinander abgestimmt, dass nach einem vergleichsweise kleinen Drehwinkel von beispielsweise etwa 10° sich die Nocken 22 bereits an den Stirnseiten der Randbereiche 13a, 13b der Teile 13, 14 befinden. Dadurch kommt das Rastelement 20 aus seiner Verrastung automatisch frei.

Die Erfindung ist auf das dargestellte Ausführungsbeispiel nicht eingeschränkt. So ist es beispielsweise möglich, das Pedal 1 derart auszuführen, dass wahlweise eine der Hülsen gegen Federkraft verschiebbar angeordnet ist oder auch, dass beide Hülsen verschiebbar sind. Anstelle einer Feder können ferner mehrer Federn vorgesehen sein.

## Patentansprüche

1. Pedalsystem für Fahrräder mit einem an einem Schuh befestigbaren und ein Rastelement (20) aufweisenden Schuheinsatz (12) und einem am Fahrrad befestigbaren, um eine Achse drehbaren Pedal (1), welches eine Aufnahme für das Rastelement (20) aufweist, in welcher dieses gegen Federkraft einrastbar und aus welcher dieses unter Ausführen einer Drehbewegung lösbar ist, wobei die Aufnahme zwischen zwei zur Pedalachse rotationssymmetrisch ausgeführten Aufnahmeteilen (13, 14) gebildet ist, welche gegen Federkraft in Richtung Pedalachse voneinander weg bewegbar und Bestandteile von zylindrischen Außenflächen aufweisenden Hülsen (15, 5) sind,
**dadurch gekennzeichnet,**
**dass** das Rastelement (20) ein längliches, in seiner eingerasteten Lage quer zur Pedalachse verlaufendes Teil ist, welches zwei Nocken (22) aufweist, welche in der eingerasteten Lage die Aufnahmeteile (13, 14) untergreifen, und dass der Schuheinsatz (12) ein Steuerelement (21) aufweist, welches sich bei einer Drehbewegung des Schuheinsatzes (12) zum Lösen des eingerasteten Rastelementes (20) an den zylindrischen Außenflächen der Hülsen (15, 5) derart abstützt, dass das Rastelement (20) angehoben wird.

2. Pedalsystem nach Anspruch 1, **dadurch gekennzeichnet**, die Aufnahmeteile (13, 14) einander zugewandte Aufnahmenuten bilden bzw. aufweisen.

3. Pedalsystem nach Anspruch 1 oder 2, **dadurch gekennzeichnet, dass** eines der beiden Aufnahmeteile (13, 14) gegen die Kraft zumindest einer Feder (11) bewegbar ist.

4. Pedalsystem nach einem der Ansprüche 1 bis 3, **dadurch gekennzeichnet, dass** die eine Hülse (5) gegenüber der Achse (2) des Pedals (1) drehbar gelagert ist und die zweite Hülse (15) auf der ersten Hülse (5) beweglich gelagert ist.

5. Pedalsystem nach einem der Ansprüche 1 bis 4, **dadurch gekennzeichnet, dass** die erste Hülse (5) gegenüber der Achse (2) des Pedals (1) unverschiebbar ist und die zweite Hülse (15) jene ist, die gegen Federkraft verschiebbar ist.

6. Pedalsystem nach einem der Ansprüche 1 bis 5, **dadurch gekennzeichnet, dass** als Feder zumindest eine Druckfeder (11) vorgesehen ist, welche mit ihrem einen Ende an einem mit der Hülse (5) verbundenen Widerlager und mit ihrem zweiten Ende an der zweiten Hülse (15) abgestützt ist.

7. Pedalsystem nach einem der Ansprüche 1 bis 6, **dadurch gekennzeichnet, dass** die erste Hülse (5) mittels Kugellager (6a, 6b) am Achsteil (2) des Pedals (1) drehbar gelagert ist.

8. Pedalsystem nach einem der Ansprüche 1 bis 7, **dadurch gekennzeichnet, dass** das Rastelement (20) ein längliches Bauteil ist, welches zum Positionieren zwischen den Aufnahmeteilen (13, 14) einen keilförmig ausgeführten Bereich aufweist.

9. Pedalsystem nach einem der Ansprüche 1 bis 8, **dadurch gekennzeichnet, dass** die Nocken (22) an Seitenflächen des Rastelementes (20) vorgesehen sind.

10. Pedalsystem nach einem der Ansprüche 1 bis 9, **dadurch gekennzeichnet, dass** das Steuerelement (21) seitlich des Rastelementes (20) verlaufende Stützflügel (21c) aufweist, deren Innenseiten mit zylindrisch und zur Pedalachse rotationssymmetrisch verlaufenden Außenflächenbereichen der Hülsen (5, 15) in Kontakt treten bzw. sind und mit einem Radius gekrümmt sind, der größer ist als der Radius der Außenflächen der Hülsen (5, 15).

11. Pedalsystem nach Anspruch 9 oder 10, **dadurch gekennzeichnet, dass** das Steuerelement (21) mit dem Schuh verbindbar ist.

## Claims

1. A pedal system for bicycles with a shoe insert (12) that is attachable to a shoe and has an engaging element (20), and with a pedal (1) that is attachable to the bicycle and is rotatable about an axle, and has a seating for the engaging element (20), in which the engaging element is engageable against spring force and from which the engaging element may be detached by performing a rotating movement, wherein the seating is conformed between two seating parts (13, 14) that are constructed rotationally symmetrically about the axle of the pedal, and which are movable away from each other towards the axle of the pedal against spring force, and are components of bushings (15, 5) with cylindrical external surfaces,
**characterised in that**
the engaging element (20) is an elongated part that extends perpendicularly to the pedal axle when engaged, and has two cams (22) which clasp below the seating parts (13, 14) in the engaged position, and that the shoe insert (12) has a control element (21) which is forced against the cylindrical outer surfaces of the bushings (5, 15) in such manner when the shoe insert (12) is rotated to release the engaged engaging element (20) that the engaging element (20) is raised.

2. The pedal system as recited in claim 1, **characterised in that** the seating parts (13, 14) form or have seating grooves that face towards each other.

3. The pedal system as recited in either of claims 1 or 2, **characterised in that** one of the two seating parts (13, 14) is movable against the force of at least one spring (11).

4. The pedal system as recited in any of claims 1 to 3, **characterised in that** the one bushing (5) is supported so as to be rotatable relative to the axle (2) of the pedal (1), and the second bushing (15) is supported movably on the first bushing (5).

5. The pedal system as recited in any of claims 1 to 4, **characterised in that** the first bushing (5) is immovable relative to the axle (2) of the pedal (1), and it is the second bushing (15) that is movable against spring force.

6. The pedal system as recited in any of claims 1 to 5, **characterised in that** at least one compression spring (11) is provided as the spring, and one end of which is braced against a counter bearing that is connected to the bushing (5), and the second end of which is connected to the second bushing (15).

7. The pedal system as recited in any of claims 1 to 6, **characterised in that** the first bushing (5) is supported rotatably on the axle component (2) via ball bearings (6a, 6b).

8. The pedal system as recited in any of claims 1 to 7, **characterised in that** the engaging element (20) is an elongated component that has a wedge-shaped region to enable it to be positioned between the seating parts (13, 14).

9. The pedal system as recited in any of claims 1 to 8, **characterised in that** the cams (22) are provided on side surfaces of the engaging element (20).

10. The pedal system as recited in any of claims 1 to 9, **characterised in that** the control element (21) has support wings (21c) extending to the side of the engaging element (20), and the insides of which are in contact or come into contact with cylindrical, external surface areas of the bushings (5, 15) that extend rotationally symmetrically about the pedal axle and are curved with a radius which is greater than the radius of the external surfaces of the bushings (5, 15).

11. The pedal system as recited in either of claims 9 or 10, **characterised in that** the control element (21) is able to be attached to a shoe.

## Revendications

1. Système de pédales pour bicyclettes, avec un insert de chaussure (12) pouvant se fixer sur la chaussure et comportant un élément d'enclenchement (20) et avec une pédale (1) rotative autour d'un axe et pouvant se fixer sur la bicyclette, qui comporte un logement pour l'élément d'enclenchement (20) dans lequel ce dernier peut s'enclencher contre la force d'un ressort et hors duquel il peut se dégager par exercice d'une rotation, le logement étant formé entre deux éléments de logement (13, 14) réalisés de façon symétrique en rotation par rapport à l'axe de la pédale, que l'on peut éloigner l'un de l'autre contre la force du ressort en direction de l'axe de la pédale et qui sont des composants de douilles (15, 5) présentant des surfaces extérieures cylindriques,
**caractérisé en ce que**
l'élément d'enclenchement (20) est un élément oblong, s'étendant à la transversale de l'axe de pédale, dans sa position enclenchée, qui comporte deux cames (22), qui dans la position enclenchée s'accrochent par derrière dans les éléments de logement (13, 14) et **en ce que** l'insert de chaussure (12) comporte un élément de commande (21), qui lors d'une rotation de l'insert de chaussure (12) pour le dégagement de l'élément d'enclenchement (20) enclenché s'appuie sur les surfaces extérieures cylindriques de douilles (15, 5), de façon à ce que l'élément d'enclenchement (20) se soulève.

2. Système de pédales selon la revendication 1, **caractérisé en ce que** les éléments de logement (13, 14) forment ou comportent des rainures de logement qui se font face.

3. Système de pédales selon la revendication 1 ou 2, **caractérisé en ce que** l'un des deux éléments de logement (13, 14) est mobile contre la force d'au moins un ressort (11).

4. Système de pédales selon l'une quelconque des revendications 1 à 3, **caractérisé en ce que** l'une des douilles (5) est logée de façon rotative par rapport à l'axe (2) de la pédale (1) et **en ce que** la deuxième douille (15) est logée de façon mobile sur la première douille (5).

5. Système de pédales selon l'une quelconque des revendications 1 à 4, **caractérisé en ce que** la première douille (5) est indéplaçable par rapport à l'axe (2) de la pédale (1) et **en ce que** la deuxième douille (15) est celle qui est déplaçable contre la force du ressort.

6. Système de pédales selon l'une quelconque des revendications 1 à 5, **caractérisé en ce qu'**on a prévu en tant que ressort au moins un ressort de pression (11) qui par l'une de ses extrémités s'appuie sur un aboutement relié avec la douille (5) et qui par sa deuxième extrémité s'appuie sur la deuxième douille (15).

7. Système de pédales selon l'une quelconque des revendications 1 à 6, **caractérisé en ce que** la première douille (5) est logée de façon rotative sur l'élément d'axe (2) de la pédale (1) au moyen de roulements à billes (6a, 6b).

8. Système de pédales selon l'une quelconque des revendications 1 à 7, **caractérisé en ce que** l'élément d'enclenchement (20) est un élément oblong, qui pour le positionnement entre les éléments de logement (13, 14) comporte une zone réalisée de façon cunéiforme.

9. Système de pédales selon l'une quelconque des revendications 1 à 8, **caractérisé en ce que** les cames (22) sont prévues sur des surfaces latérales de l'élément d'enclenchement (20).

10. Système de pédales selon l'une quelconque des revendications 1 à 9, **caractérisé en ce que** l'élément de commande (21) comporte des ailettes d'appui (21c) s'étendant latéralement de l'élément d'enclenchement (20), dont les faces intérieures entrent ou sont en contact avec des zones de surfaces extérieures cylindriques et s'étendant de façon symétrique en rotation vers l'axe de la pédale des douilles (5, 15) et sont courbées avec un rayon qui est supérieur au rayon des surfaces extérieures des douilles (5, 15).

11. Système de pédales selon l'une quelconque des revendications 9 ou 10, **caractérisé en ce que** l'élément de commande (21) peut être relié avec la chaussure.
